(19)

Europäisches Patentamt

European Patent Office

Office européen des brevets

(11) **EP 4 632 714 A1**

(12) **EUROPEAN PATENT APPLICATION**

(43) Date of publication:
**15.10.2025 Bulletin 2025/42**

(21) Application number: **25160127.4**

(22) Date of filing: **26.02.2025**

(51) International Patent Classification (IPC):
*G08G 1/16* $^{(2006.01)}$     *B60W 30/09* $^{(2012.01)}$
*B60W 30/095* $^{(2012.01)}$     *B60W 30/18* $^{(2012.01)}$

(52) Cooperative Patent Classification (CPC):
**G08G 1/166; B60W 30/09; B60W 30/0953;
B60W 30/0956; B60W 30/18163; G08G 1/167**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.03.2024 JP 2024054475**

(71) Applicant: **HONDA MOTOR CO., LTD.
Tokyo 105-8404 (JP)**

(72) Inventors:
- **Imamura, Rintaro
  Wako-shi, Saitama, 3510193 (JP)**
- **Singh, Shrita
  Wako-shi, Saitama, 3510193 (JP)**
- **Koga, Shumon
  Wako-shi, Saitama, 3510193 (JP)**

(74) Representative: **Kiwit, Benedikt
Mitscherlich PartmbB
Patent- und Rechtsanwälte
Karlstraße 7
80333 München (DE)**

(54) **MOVING BODY CONTROL SYSTEM, CONTROL METHOD THEREOF, AND STORAGE MEDIUM**

(57) A moving body control system that determines action of a moving body for passing through a specific area on a movement route, acquires a moving situation of the moving body and a moving situation of a cooperation partner, and calculates a cooperation degree indicating a degree that the moving body passes through the specific area in cooperation with the cooperation partner, based on the moving situation of the moving body and the moving situation of the cooperation partner. The system determines the action of the moving body toward the specific area to increase the cooperation degree. In one embodiment, the cooperation degree increases, as one of the moving body and the cooperation partner exits from the specific area and then the other one enters the specific area.

**F I G. 5**

EP 4 632 714 A1

**Description**

BACKGROUND OF THE INVENTION

Field of the Invention

The present invention relates to a moving body control system, a control method thereof, and a storage medium.

Description of the Related Art

An intelligent driver model (IDM) has been conventionally known as a model for predicting behavior of a moving body. With this model, it is possible to handle a non-linear traveling speed, as compared with a rule-based model that assumes constant velocity movements of a moving body, and thus it is possible to predict behavior more similar to the reality. However, the IDM is assumed to be used when traveling on highways, and another moving body handled in the model is assumed to follow a target speed that has been set. That is, in the IDM, when another moving body travels in the same lane, it is also possible to consider a relationship between the self-moving body and another moving body. However, it is not possible to consider cooperative behavior with another moving body that is moving in a direction different from the self-moving body.

A system that enables cooperative action between a plurality of moving bodies has been proposed (U.S. Patent No. 10139828).

In the system disclosed in U.S. Patent No. 10139828, emphasizing action is achieved by performing communication between moving bodies. It is certain that complex and cooperative action can be achieved by making an agreement on action with each other via communication. However, communication takes time in some cases, and the cooperative action also has to be performed in an extremely short time, in some cases. That is, there is a demand for a technique of enabling cooperative action between a plurality of moving bodies without making an agreement with each other via communication.

SUMMARY OF THE INVENTION

The present invention has been made in view of the above issues, and has an object to achieve cooperative action of a moving body without necessitating an agreement via communication.

In order to solve the aforementioned issues, one aspect of the present disclosure provides a moving body control system as specified in claims 1-13.

Another aspect of the present disclosure provides a control method of a moving body control system as specified in claim 14.

Still another aspect of the present disclosure provides a storage medium as specified in claim 15.

According to the present invention, the cooperative action of a moving body is achieved without necessitating an agreement via communication.

BRIEF DESCRIPTION OF THE DRAWINGS

FIG. 1 is a diagram illustrating a configuration example of a vehicle as an example of a moving body according to an embodiment;

FIG. 2 is a block diagram illustrating a functional configuration example of a control device according to an embodiment;

FIG. 3 is a block diagram illustrating a functional configuration example of a cooperative action determination unit according to an embodiment;

FIG. 4 is a diagram for describing an example of cooperative action according to an embodiment;

FIG. 5 is a diagram for describing an example of calculating an agreement degree as an example of a cooperation degree according to an embodiment;

FIG. 6 is a diagram for describing an example of calculating the cost of a first passing mode according to an embodiment;

FIG. 7 is a diagram for describing an example of calculating the cost of a second passing mode according to an embodiment; and

FIG. 8 is a flowchart illustrating a series of operations of driving assistance processing according to an embodiment.

DESCRIPTION OF THE EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

<Vehicle Configuration Example>

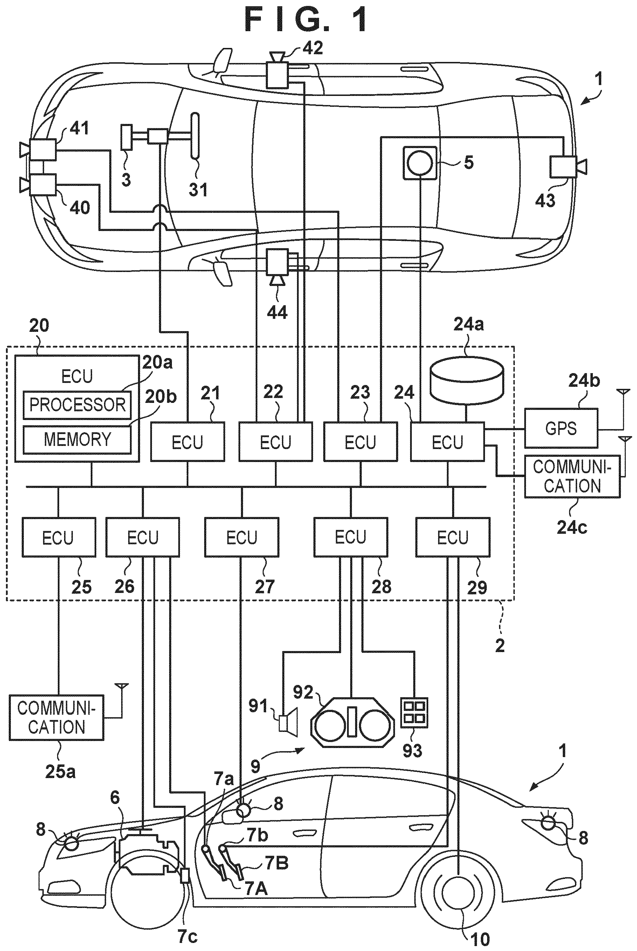

FIG. 1 is a block diagram of a vehicle 1 as an example of a moving body according to the present invention. In FIG. 1, an outline of the vehicle 1 is illustrated in a plan view and in a side view. The vehicle 1 is, for example, a four-wheeled passenger vehicle, but may be a two-wheeled vehicle or any other type of vehicle. In addition, a moving body control system according to the present embodiment may relate to a moving body, a control device such as an ECU included in the moving body, or an information processing server on a cloud for controlling the moving body. That is, a part or the entirety of the driving assistance processing to be described later according to the present embodiment may be performed in the moving body, or may be performed in the information processing server on the cloud. Further, the moving body is not limited to a vehicle, and may include various moving bodies such as a robot capable of autonomously traveling.

The vehicle 1 includes a vehicle control device 2 (hereinafter, simply referred to as a control device 2), which controls the vehicle 1. The control device 2 includes a plurality of electronic control units (ECUs) 20 to 29, which are connected to be capable of communicating with one another through an in-vehicle network. Each ECU includes a processor such as a central processing unit (CPU) or a graphics processing unit (GPU), a memory such as a semiconductor memory, an interface with an external device, and the like. The memory stores programs to be executed by the processor, data for use in processing by the processor, and the like. Each of the ECUs may include a plurality of processors, memories, interfaces, or the like. For example, the ECU 20 includes a processor 20a and a memory 20b. Processing by the ECU 20 is performed by the processor 20a executing instructions included in a program stored in the memory 20b. Instead of this, the ECU 20 may include an integrated circuit such as an application specific integrated circuit (ASIC) dedicated to perform processing by the ECU 20. A similar configuration applies to the other ECUs.

Hereinafter, functions and the like to be performed by each of the ECUs 20 to 29 will be described. Note that the number of ECUs and functions to be performed can be designed as appropriate, and can be subdivided or integrated as compared with the present embodiment. For example, one ECU (for example, the ECU 22) may also include a function of another ECU.

The ECU 20 conducts control related to manual traveling and automated traveling of the vehicle 1. In the automated traveling, at least one of steering of the vehicle 1 and acceleration/deceleration is controlled in an automated manner. Note that the automated traveling by the ECU 20 may include automated traveling that does not necessitate a driver's traveling operation (can also be referred to as automated driving) and automated traveling for assisting the driver's driving operation (can also be referred to as driving assistance). In place of the driver's driving, the control of traveling by the ECU 20 may include, for example, control for automatically stopping or steering the vehicle in order to avoid a collision.

The ECU 21 controls an electric power steering device 3. The electric power steering device 3 includes a mechanism that steers front wheels in accordance with a driver's driving operation (steering operation) on a steering wheel 31. In addition, the electric power steering device 3 includes a motor that exerts a driving force for assisting the steering operation or automatically steering the front wheels, a sensor that detects a steering angle, and the like. When the driving state of the vehicle 1 is automated driving, the ECU 21 automatically controls the electric power steering device 3 in response to an instruction from the ECU 20, and controls the advancing direction of the vehicle 1.

The ECUs 22 and 23 control detection units for detecting surrounding situations of the vehicle, and perform information processing on detection results. The vehicle 1 includes one standard camera 40 and four fisheye cameras 41 to 44, each serving as the detection unit for detecting a surrounding situation of the vehicle. The standard camera 40 and the fisheye cameras 42 and 44 are connected to the ECU 22. The fisheye cameras 41 and 43 are connected to the ECU 23. By analyzing the images that have been captured by the standard camera 40 and the fisheye cameras 41 to 44, the ECUs 22 and 23 are capable of recognizing a state of a target object such as a type, a position, and a speed of the target object, a lane area on a movement route, a travel road boundary (a white line), and a division line (a broken line or the like) between the lanes. Note that the type, number, and mounted position of the camera included in the vehicle 1 are not limited to the example in the present embodiment, and may have any other configuration. In addition, the vehicle 1 may include a light detection and ranging (LiDAR) or a millimeter wave radar as a detection unit for detecting a target object in the surroundings of the vehicle 1 and measuring a distance to the target object.

The standard camera 40 is attached at the center in a front part of the vehicle 1, and captures an image of a surrounding situation ahead of the vehicle 1. The fisheye camera 41 is attached at the center in the front part of the vehicle 1, and captures an image of a surrounding situation ahead of the vehicle 1. In FIG. 1, the standard camera 40 and the fisheye camera 41 are illustrated to be horizontally aligned with each other. However, the arrangement of the standard camera 40 and the fisheye camera 41 are not limited to this, and they may be vertically aligned with each other, for example. In addition, at least one of the standard camera 40 and the fisheye camera 41 may be attached to a front portion of the roof (for example, on the vehicle interior side of the windshield) of the vehicle 1. The fisheye camera 42 is attached at the center in a right lateral side part of the vehicle 1, and captures an image of a surrounding situation on a right side of the vehicle 1. The fisheye camera 43 is attached at the center in a rear part of the vehicle 1, and images a surrounding situation on a rear side of the vehicle 1. The fisheye camera 44 is attached at the center in a left lateral side part of the vehicle 1, and images a surrounding situation on a left side of the vehicle 1.

The ECU 22 controls the standard camera 40 and the fisheye cameras 42 and 44, and performs information processing on detection results. The ECU 23 controls the fisheye cameras 41 and 43, and performs information processing on detection results. The detection units for respectively detecting the surrounding situations of the vehicle are divided into two systems, so that the reliability of the detection results can be improved. In addition, the ECU 22 is capable of detecting the direction of the driver's head and the driver's line of sight using an image obtained by imaging the driver with a fisheye camera, not illustrated, installed in the vehicle interior.

The ECU 24 controls a gyro sensor 5, a GPS sensor 24b, and a communication device 24c, and performs information processing on a detection result or a communication result. The gyro sensor 5 detects a rotational movement of the vehicle 1. It becomes possible to determine the course of the vehicle 1, based on a detection result of the gyro sensor 5, a wheel speed, and the like. The GPS sensor 24b detects a current position of the vehicle 1. The communication device 24c performs wireless communication with a server that provides map information and traffic information, and acquires these pieces of information. The communication device 24c may acquire the position information and the information of the moving speed of another moving body from an external device. The ECU 24 is capable of accessing a map information database 24a, which is constructed in a memory, and the ECU 24 performs route search and the like from the current location to a destination. The ECU 24, the map information database 24a, and the GPS sensor 24b constitute a so-called navigation device.

The ECU 25 includes a communication device 25a for inter-vehicle communication. The communication device 25a performs, for example, wireless communication with another vehicle in the surroundings to exchange information between the vehicles.

The ECU 26 controls a power plant 6. The power plant 6 is a mechanism that outputs a driving force for rotating driving wheels of the vehicle 1, and includes, for example, an engine and a transmission. For example, the ECU 26 controls the output of the engine in response to a driver's driving operation (an accelerator operation or an acceleration operation) that has been detected by an operation detection sensor 7a, which is provided on an accelerator pedal 7A, or switches a gear ratio of the transmission, based on information such as a vehicle speed that has been detected by a vehicle speed sensor 7c.

The ECU 27 controls a lighting device (a headlight, a taillight, and the like) including direction indicators 8 (blinkers). In the example of FIG. 1, the direction indicators 8 are provided at the front portion, the door mirror, and the rear portion of the vehicle 1.

The ECU 28 controls an input and output device 9. The input and output device 9 outputs information to a passenger (for example, a driver), and receives an input of information from the driver. A sound output device 91 notifies the driver of information by, for example, sounds including a predetermined sound or an utterance. The ECU 22 performs, for example, driving assistance processing to be described later, determines to give a notification, and transmits the notification to the ECU 28, and then the notification content is output. The driving assistance processing will be described later. A display device 92 notifies the driver of information, by displaying an image. The display device 92 is disposed, for example, in front of a driver's seat, and constitutes an instrument panel or the like. Note that although the sound and the display have been given as examples here, information may also be notified by vibration or light. In addition, information may be notified by a combination of two or more of the sound, the display, the vibration, and the light. An input device 93 is a group of switches that are disposed at positions for the driver to be able to operate and give an instruction to the vehicle 1, but may also include a voice input device.

The ECU 29 controls a brake device 10 and a parking brake (not illustrated). The brake device 10 is, for example, a disc brake device, and is provided on each wheel of the vehicle 1 to apply resistance against rotations of the wheels to decelerate or stop the vehicle 1. The ECU 29 controls the activation of the brake device 10 in response to a driver's driving operation (a braking operation) that has been detected by an operation detection sensor 7b, which is provided on a brake pedal 7B, for example. When the driving state of the vehicle 1 is the automated driving, the ECU 29 automatically controls the brake device 10 in response to an instruction from the ECU 20 to control the vehicle 1 to be decelerated and stopped. The brake device 10 and the parking brake can also be activated to maintain the stopped state of the vehicle 1. In addition, in a case where the transmission of the power plant 6 includes a parking lock mechanism, it is also possible to activate the parking lock mechanism to maintain the stopped state of the vehicle 1.

<Functional Configuration Example Achieved in ECU 22>

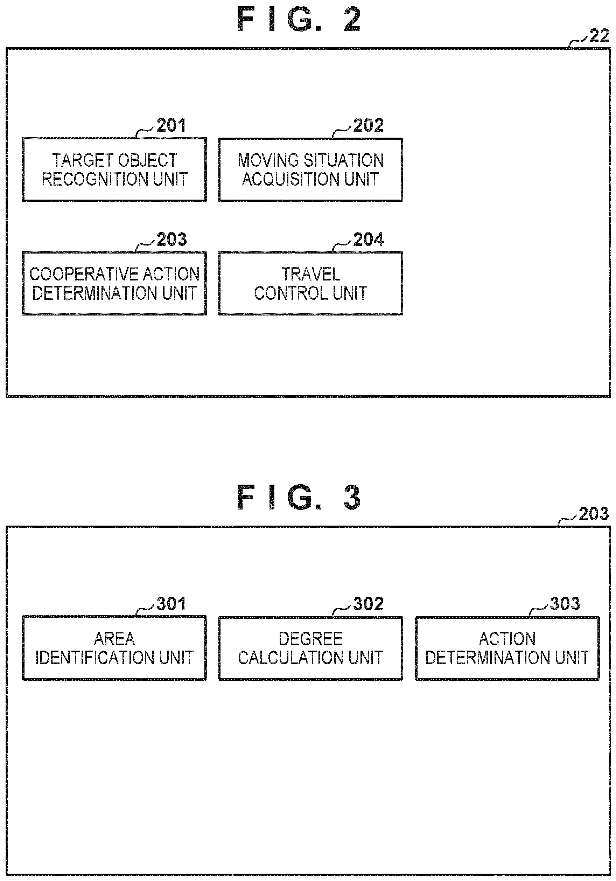

Next, a functional configuration example achieved in the ECU 22 will be described with reference to FIG. 2. Note that some or all of the functions to be described below as functions achieved in the ECU 22 may be achieved in another ECU (for example, the ECU 20). The functional configuration example illustrated in FIG. 2 illustrates an example of a functional configuration achieved by the ECU 22 executing a program stored in an internal memory. In addition, the functional configuration example illustrated in FIG. 2 focuses on a configuration related to the driving assistance processing to be described later. Therefore, the functions achieved in the ECU 22 are not limited to those illustrated in FIG. 2, and may include any other function.

A target object recognition unit 201 recognizes a state of a target object outside the vehicle 1, based on at least one of an image obtained from a detection unit and sensor information of the LiDAR or the like. The target object includes, for example, a moving body in the surroundings (a surrounding vehicle or bicycle) of the vehicle 1, a passerby such as a pedestrian or a person riding on a bicycle, or a falling object. The surrounding vehicle includes any other vehicle on the lane in which the vehicle 1 travels, any other vehicle traveling on an opposite lane to the lane in which the vehicle 1 travels, or any other vehicle traveling on a lane intersecting with the lane in which the vehicle 1 travels. The state of the target object includes, for example, a type of the target object, a position of the target object, a moving speed of the target object, a moving trajectory of the target object, and the like. The position of the target object may be a relative position from the vehicle 1. The target object recognition unit 201 is capable of recognizing the state of the target object in an external field, by using, for example, one or more neural networks. However, any other learning model may be used.

A moving situation acquisition unit 202 acquires a moving situation of the vehicle 1. The moving situation acquisition unit 202 acquires a current position and a moving speed as the moving situation of the vehicle 1 from, for example, the GPS sensor 24b or the like via, for example, the ECU 24. In addition, the moving situation acquisition unit 202 acquires a moving situation of a moving body in the surroundings of the vehicle 1. The moving situation acquisition unit 202 is capable of acquiring, as the moving situation of a moving body in the surroundings of the vehicle 1, a current position and a moving speed of such a moving body from at least one of the target object recognition unit 201 and the communication unit 24c.

A cooperative action determination unit 203 determines action of the vehicle 1 in order to take cooperative action with another moving body to be described later. As illustrated in FIG. 3, the cooperative action determination unit 203 includes an area identification unit 301, a degree calculation unit 302, and an action determination unit 303.

The area identification unit 301 identifies a common area 406 to be described below, based on at least one of the image obtained from the detection unit and the sensor information of the LiDAR or the like. For example, the area identification unit 301 is capable of identifying the common area 406 through which the vehicle is capable of passing, based on the road shape and the target object on the road that have been recognized. In this case, it becomes possible to grasp the common area in consideration of a movable obstacle such as a parked vehicle and without using a high-precision map. The area identification unit 301 may identify the common area by using information such as a road shape and a lane that can be passed included in map data acquired beforehand, or by using such information in addition to the sensor information or the like. In this case, it becomes possible to identify the area by using precise data.

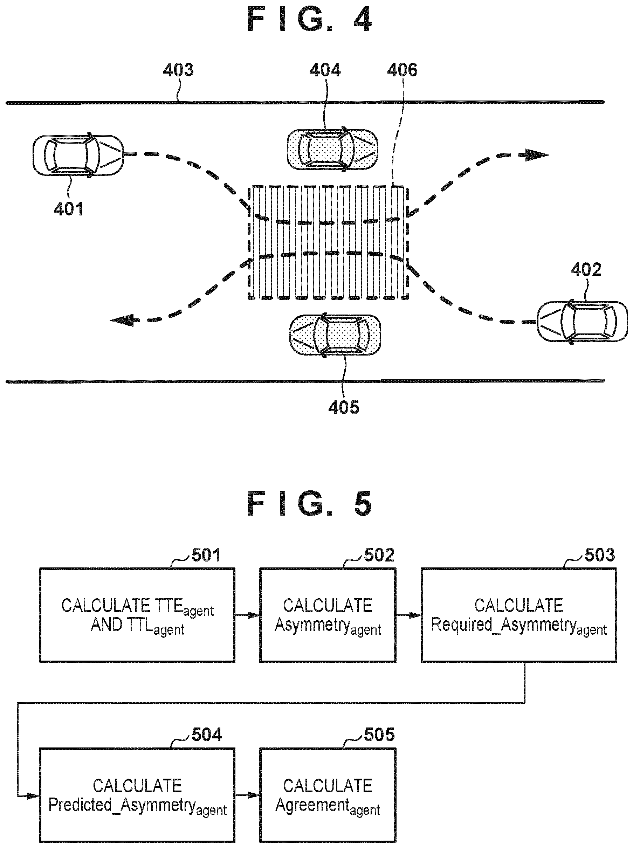

FIG. 4 illustrates an example in which the vehicle 1 takes cooperative action with another moving body. In the example illustrated in FIG. 4, an example is illustrated in which a vehicle 401 (that is, the vehicle 1), which is a control object, and a vehicle 402 take cooperative action, and pass through a specific area (referred to as the common area 406) on a road 403. The width of the common area 406 is limited by, for example, a vehicle 404 and a vehicle 405, which are parked on the road 403. That is, the vehicle 401 and the vehicle 402, which is a cooperation partner, are capable of passing through the common area 406, but the vehicle 401 and the vehicle 402 are not capable of passing through the common area 406 simultaneously. Therefore, it is necessary for the vehicle 401 and the vehicle 402 to act in a cooperative manner, one of the vehicle 401 and the vehicle 402 that has entered earlier exits from the common area 406, and then the other one enters the common area 406.

In the present embodiment, an example will be described in which the vehicle 401 achieves cooperative action so that the vehicle 401 passes through the common area 406 in cooperation with the vehicle 402, based on the moving situation of the vehicle 401 and the moving situation of the vehicle 402, which is the cooperation partner, without communicating an agreement on the action with the vehicle 402.

The degree calculation unit 302 calculates an agreement degree as an example of a cooperation degree for determining the cooperative action. The cooperation degree increases, for example, as the moving situations in which one of the vehicle 401 and the cooperation partner (the vehicle 402) exits from the common area 406 and then the other one enters the common area 406. The agreement degree will be described later. Then, the degree calculation unit 302 calculates the respective costs of two passing aspects including a case where the vehicle 402 gives way to the vehicle 401 in passing the common area 406 and a case where the vehicle 402 does not give way to the vehicle 401 in passing the common area 406. The vehicle 401 compares the costs of two passing aspects, and selects one passing aspect of a lower cost. Note that the vehicle 401 calculates a coefficient based on the cooperation degree, based on the above-described cooperation degree, and multiplies the calculated cost by the coefficient. By configuring in this manner, in the calculation of the cost, the cooperation degree works such that as the cooperation degree decreases, the cost increases. In this manner, by combining the cooperation degree in the selection of the cost, the vehicle 401 is capable of changing the moving situation of the vehicle 401 into the common area so that the cooperation degree increases.

A method for calculating the agreement degree as an example of the cooperation degree will be specifically described with reference to FIG. 5. Note that the degree calculation unit 302 is capable of calculating predicted asymmetry for all traffic participants who will possibly pass through the common area in accordance with Formulae (1) to (5) to be described later. The degree calculation unit 302 may identify a traffic participant having a smallest value of the predicted asymmetry as the cooperation partner. In this case, it is possible to identify a partner that can be most competitive in the common area, as the cooperation partner. In the following description, the traffic participant to be a processing object will also be referred to as an agent. In the following description, a case where the traffic participant of the processing object is the vehicle 402 will be described as an example. The degree calculation unit 302 calculates $TTE_{agent}$ and $TTL_{agent}$ in accordance with the following Formulae (1) and (2) (501). TTE denotes Time to Entry, and $TTE_{agent}$ indicates a time until the vehicle 402 arrives at a start position of the common area 406. In addition, TTL denotes Time to Leave, and $TTL_{agent}$ indicates a time until the vehicle 402 leaves an end position of the common area 406.

[Mathematical Formula 1]

$$TTE_{agent} = \frac{a\ distance\ to\ the\ start\ position\ of\ the\ common\ area}{a\ moving\ speed} \quad (1)$$

Mathematical Formula 2]

$$TTL_{agent} = \frac{a\ distance\ to\ the\ end\ position\ of\ the\ common\ area}{a\ moving\ speed} \quad (2)$$

Next, the degree calculation unit 302 calculates $Asymmetry_{agent}$ in accordance with Formula (3) (502). $TTE_{ego}$ indicates a time until the vehicle 401 arrives at the start position of the common area 406. That is, $Asymmetry_{agent}$ represents asymmetry of arrival time at the common area 406. In addition, this value can also be considered to represent a time difference (with a code) until the vehicle 401 and the vehicle 402 arrive at the start position.

[Mathematical Formula 3]

$$Asymmetry_{agent} = TTE_{ego} - TTE_{agent} \quad (3)$$

The degree calculation unit 302 calculates $Required\_Asymmetry_{agent}$ in accordance with Formula (4) (503).

[Mathematical Formula 4]

$$Required\_Asymmetry_{agent}$$
$$= \begin{cases} TTL_{ego} - TTE_{ego} \left( if\ Asymmetry < 0 \right) \\ TTL_{agent} - TTE_{agent} \left( if\ Asymmetry > 0 \right) \end{cases} \quad (4)$$

$Required\_Asymmetry_{agent}$ indicates asymmetry necessary for both vehicles to prevent from meeting in the common area 406, in passing through the common area 406. This value can also be considered to represent the time necessary for the vehicle that arrives earlier at the common area 406 to pass through the common area 406. An upper part of Formula (4) corresponds to a case where the vehicle 401 arrives at the common area 406 earlier, and a lower part corresponds to a case where the vehicle 402 arrives at the common area 406 earlier.

The degree calculation unit 302 calculates $Predicted\_Asymmetry_{agent}$ in accordance with Formula (5) (504).

[Mathematical Formula 5]

$$\text{Predicted\_Asymmetry}_{agent}$$

$$= \begin{cases} \Delta Asymmetry * TTE_{ego} + Asymmetry & (if \ Asymmetry < 0) \\ \Delta Asymmetry * TTE_{agent} + Asymmetry & (if \ Asymmetry > 0) \end{cases} \quad (5)$$

Predicted_Asymmetry$_{agent}$ represents predicted asymmetry.

$\Delta$Asymmetry represents Asymmetry that has been changed during one step (for example, 100 ms) of the most recent processing. Therefore, in Formula (5), it is possible to calculate the asymmetry to be predicted in the future development until the vehicle 401 or 402 arrives at the common area 406.

Predicted_Asymmetry$_{agent}$ can also be considered to represent a predicted time difference (with a code) until the vehicle 401 and the vehicle 402 each arrive at the start position.

The degree calculation unit 302 calculates an agreement degree Agreement$_{agent}$ in accordance with Formula (6) (505).

[Mathematical Formula 6]

$$\text{Agreement}_{agent} = \frac{\text{Predicted\_Asymmetry}_{agent}}{\text{Required\_Asymmetry}_{agent}} \quad (6)$$

The agreement degree is represented by a ratio between asymmetry necessary for preventing the vehicles from meeting in the common area 406 and the predicted asymmetry. This enables quantification of the agreement between the vehicle 401 and the vehicle 402. The agreement degree becomes higher, as the predicted asymmetry is larger than the asymmetry necessary for preventing the vehicles from meeting in the common area. In other words, as the time difference until the vehicle 401 and the vehicle 402 arrive at the start position is larger than the time necessary for the vehicle that arrives earlier to pass through the common area 406, the agreement degree increases, and the cooperative action of the vehicles illustrated in FIG. 4 is easily achieved. For example, in the action in which one of the vehicles decelerates before the common area 406 and gives way to the cooperation partner, the time difference until the vehicle 401 and the vehicle 402 arrive at the start position increases, and thus the agreement degree increases. That is, by determining the action of the vehicle 401 to increase the absolute value of the agreement degree in Formula 6, the cooperative action for the common area is achieved. For example, in a case where the cooperation degree in the present embodiment corresponds to an absolute value of the agreement degree, the cooperation degree increases, as the time difference until the vehicle 401 and the vehicle 402 arrive at the start position is larger than the time necessary for the vehicle that arrives earlier to pass through the common area 406.

Note that in the present embodiment, an example of using the agreement degree has been described, but the present invention is not limited to this example. The cooperation degree can be calculated, based on the moving situation, and any other calculation method can be used, as long as the cooperation degree increases, as one of the vehicle 401 and the cooperation partner exits from the common area and then the other one enters the common area.

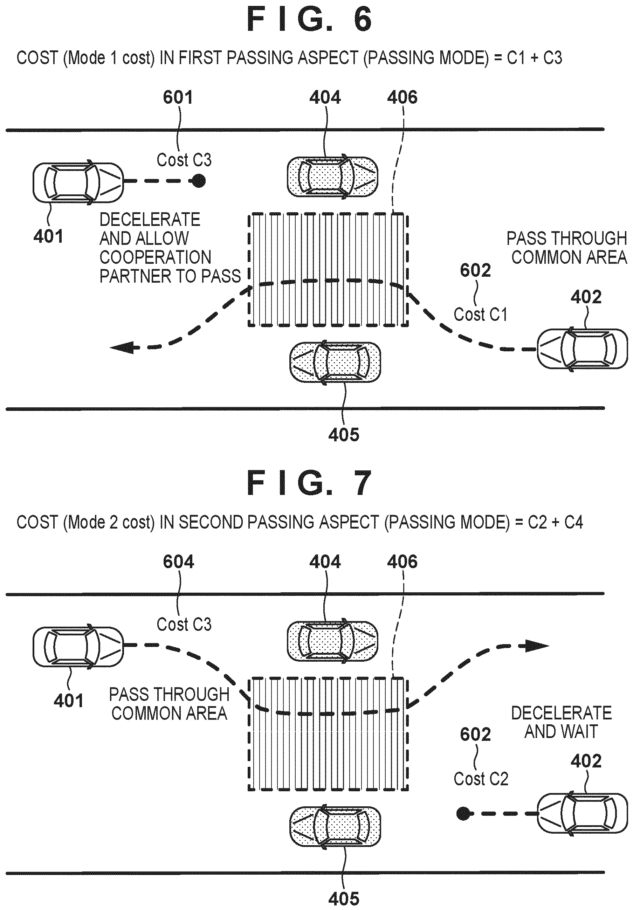

The action determination unit 303 determines the cooperative action by using costs of a prediction for a case where the cooperation partner (the vehicle 402) does not give way in passing through the common area 406 and a prediction for a case where the cooperation partner gives way. An example of a method for determining the action by the action determination unit 303 will be described with reference to FIGS. 6 and 7.

FIG. 6 schematically illustrates a calculation example of the cost in a case where a first passing aspect (also referred to as a first passing mode) is set to a case where another vehicle (the vehicle 402) does not give way in passing through the common area 406. In the first passing mode, the vehicle 402, which is the cooperation partner, passes through the common area, and the vehicle 401, which is a control object, decelerates before reaching the common area 406, and allows the vehicle 402, which is the cooperation partner, to pass earlier. The cost in the first passing mode can be calculated in accordance with Formula (7).

[Mathematical Formula 7]

$$Mode \ 1 \ cost = Cost \ C1 + Cost \ C3 \quad (7)$$

Here, Cost C1 (602) indicates a cost for changing the current moving situation (position, speed) of the vehicle 402 to a moving situation of passing through the common area (earlier) without giving way in passing through the common area. It is possible to calculate the cost, for example, based on an index of comfort in a case where the vehicle acts from the current moving situation to a moving situation after change. The index of comfort with respect to a change in the moving situation can be determined beforehand by experiment or the like. By using the index of comfort, it becomes possible to select the action in consideration of riding comfort of an occupant. For example, in the current moving situation, in a case where the vehicle 402 is scheduled to arrive at the common area 406 earlier than the vehicle 401 is scheduled to arrive at the common area 406, the current moving situation does not have to be changed largely because the vehicle 402 passes through the common area earlier. That is, the cost in this case is small. On the other hand, in the current moving situation, in a case where the vehicle 402 is scheduled to arrive at the common area 406 significantly later than the vehicle 401 is scheduled to arrive at the common area 406, the cost increases. This is because in order for the vehicle 402 to pass through the common area 406 earlier, it is necessary to change the current moving situation largely (for example, increase the speed by suddenly accelerating or the like). In addition, Cost C3 (601) indicates a cost for changing the current moving situation (position, speed) of the vehicle 401 to a moving situation of giving way in passing through the common area. For example, in the current moving situation, when the vehicle 401 is scheduled to arrive at the common area 406 earlier than the vehicle 402 is scheduled to arrive at the common area 406, the cost increases. This is because in order for the vehicle 402 to pass through the common area 406 earlier, it is necessary for the vehicle 401 to change the current moving situation largely by decelerating largely or the like. In this manner, the action determination unit 303 adds Cost C3 and Cost C1 to calculate a cost (Mode 1 Cost) in the first passing mode.

FIG. 7 schematically illustrates a calculation example of the cost in a case where another vehicle (the vehicle 402) gives way in passing through the common area 406 in a second passing aspect (also referred to as a second passing mode). In the second passing mode, the vehicle 401, which is a control object, passes through the common area, and the vehicle 402, which is a cooperation partner, decelerates before reaching the common area 406. The cost in the second passing mode can be calculated in accordance with Formula (8). [Mathematical Formula 8]

$$Mode\ 2\ cost\ \ =\ Cost\ C2 + Cost\ C4 \qquad (8)$$

Here, Cost C2 (603) indicates a cost for changing the current moving situation (position, speed) of the vehicle 402 to a moving situation of giving way in passing through the common area. Similarly to the first passing mode, it is possible to calculate this cost, for example, based on an index of comfort when the vehicle acts from the current moving situation to a moving situation after change. In addition, Cost C4 (604) indicates a cost for changing the current moving situation (position, speed) of the vehicle 402 to a moving situation of passing through the common area (earlier) without giving way in passing through the common area. The action determination unit 303 adds Cost C2 and Cost C4 to calculate a cost (Mode 2 Cost) in the second passing mode.

In a first processing step, the action determination unit 303 compares the cost (Mode 1 Cost) in the first passing mode with the cost (Mode 2 Cost) in the second passing mode, and selects a passing mode of a lower cost. The action determination unit 303 determines the action of the vehicle 401 to be in the passing mode of the lower cost, and a travel control unit 204 controls traveling of the vehicle to travel in accordance with such action.

The action of the vehicle 401 is controlled, and then in subsequent processing steps, the calculation of the agreement degree (the cooperation degree), the calculation of the cost in each passing mode, the selection of the passing mode, and the control of traveling for setting a selected passing mode are repeatedly performed.

Here, the passing mode is selected in the first processing step, and a step after the control is conducted will be described. In this situation, the degree calculation unit 302 calculates the agreement degree (or the cooperation degree) after the control in accordance with the above-described Formulae (1) to (6).

The action determination unit 303 calculates the cost of each passing mode in the current moving situation in accordance with Formulae (7) and (8). In addition, the action determination unit 303 calculates the cost of the passing mode in consideration of the agreement degree in accordance with Formula (9) or Formula (10) for the passing mode selected in a previous step. For example, when the first passing mode is selected in the previous step, the action determination unit 303 calculates the cost of the first passing mode in accordance with Formula (9).

In this timing, the action determination unit 303 multiplies the cost by a coefficient (Agreement_factor) based on the agreement degree. As described above, the coefficient based on the agreement degree works in the calculation of the cost such that as the agreement degree (the cooperation degree) decreases, the cost increases. The coefficient can be obtained by various operations based on the agreement degree, as long as it works such that as the agreement degree decreases, the cost increases. The coefficient may be, for example, a reciprocal of the agreement degree. Alternatively, the coefficient may be calculated by inputting a value based on the agreement degree into a sigmoid function in which a characteristic is appropriately set to output a value in a predetermined binary range. As an example of the value based on the agreement degree, a value obtained by multiplying the agreement degree by -1 may be used. By using a differentiable function such as the sigmoid function, it becomes possible to suppress frequent switching between the first passing mode and the second passing mode under a condition in which the cooperation degree is small. [Mathematical Formula 9]

$$Mode\ 1\ cost\ = (Cost\ C1 + Cost\ C3) * Agreement\_factor \qquad (9)$$

[Mathematical Formula 10]

$$Mode\ 2\ cost\ = (Cost\ C2 + Cost\ C4) * Agreement\_factor \qquad (10)$$

The action determination unit 303 compares the calculated costs of the passing modes, and selects a passing mode of a lower cost. For example, the action determination unit 303 compares the cost of the second passing mode calculated in Formula (8) with the cost of the first passing mode calculated in Formula (9), and selects a passing mode of a lower cost (determines the action of the vehicle 1, accordingly). In this manner, the action determination unit 303 is capable of changing the moving situation of the vehicle 401 into the common area so as to increase the cooperation degree. Then, when the moving situation of the vehicle 401 changes (under the control of the travel control unit 204), the degree calculation unit 302 again calculates a new cooperation degree based on a changed moving situation of the vehicle 401. Accordingly, the action (the passing mode) is further determined, based on the cooperation degree. By repeatedly performing such operations, the vehicle 401 is capable of controlling the cooperative action with the vehicle 402, while watching the behavior of the cooperation partner.

A description will be given with reference to FIG. 2 again. The travel control unit 204 generates a travel trajectory of the vehicle 401, based on the action that has been determined by the cooperative action determination unit 203. Then, the travel control unit 204 controls the traveling of the vehicle 401, based on the travel trajectory that has been generated. For example, when the vehicle 401 travels in the second passing mode, the travel control unit 204 generates the travel trajectory of the vehicle 401 as illustrated in FIG. 7. Alternatively, when the vehicle 401 travels in the first passing mode, the travel control unit 204 may generate the travel trajectory as illustrated in FIG. 6, and may also decelerate the vehicle 401. That is, the travel control unit 204 controls at least one of the speed and the steering of the vehicle 401 so that the vehicle 401 performs automated traveling in accordance with the determined action. In addition to the speed and the steering, the travel control unit 204 is capable of conducting various types of control necessary for the automated traveling on the travel trajectory that has been determined. The automated traveling may include automated traveling of the vehicle that does not necessitate the driver's traveling operation or automated traveling for assisting the driver's traveling operation.

Note that in the above example, a case where the advancing direction of the cooperation partner (the vehicle 402) is opposite to the advancing direction of the self-vehicle (the vehicle 401) has been described as an example. However, the present embodiment is not limited to this case, and is also applicable to a case where the cooperation partner approaches the advancing direction of the self-vehicle from a lateral direction.

<Series of Operations of Driving Assistance Processing in Vehicle>

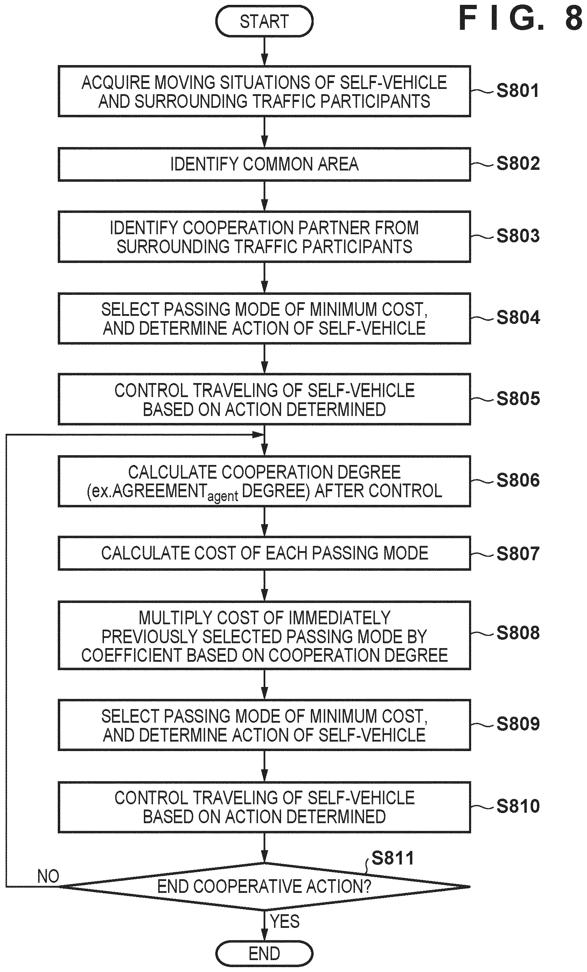

Next, a series of operations of the driving assistance processing in a vehicle will be described with reference to FIG. 8. This processing is achieved, for example, by the processor 20a of the ECU 22 of the control device 2 executing a program in the memory 20b.

In S801, the moving situation acquisition unit 202 acquires the moving situations of the self-vehicle and the surrounding traffic participants. As described above, the moving situation acquisition unit 202 is capable of acquiring the moving situations (the current position and the moving speed) of the self-vehicle and the surrounding traffic participants from at least one of the GPS sensor 24b, the target object recognition unit 201, and the communication unit 24c.

In S802, the area identification unit 301 identifies the common area (based on at least one of an image obtained from the detection unit and sensor information of the LiDAR or the like) as described above.

In S803, the degree calculation unit 302 identifies a cooperation partner from the surrounding traffic participants. As described above, the degree calculation unit 302 calculates the asymmetry to be predicted in accordance with Formulae (1) to (5), and identifies the cooperation partner using the asymmetry.

In S804, the action determination unit 303 calculates the cost of the above-described first passing mode and the cost of the above-described second passing mode, selects the passing mode of a minimum cost, and determines the action of the self-vehicle. Note that in S804, the action determination unit 303 calculates the cost in accordance with Formulae (7) and (8).

In S805, the travel control unit 204 controls the traveling of the self-vehicle in accordance with the action that has been determined (corresponding to one of the passing modes) as described above.

In S806, the degree calculation unit 302 calculates the cooperation degree (the agreement degree) between the vehicle 1 and the cooperation partner after the vehicle 1 travels in S805. For example, the degree calculation unit 302 calculates the agreement degree in accordance with Formulae (1) to (6).

In S807, the action determination unit 303 calculates the cost of each passing mode as described above. Specifically, the action determination unit 303 calculates the cost of each passing mode in accordance with Formulae (7) and (8).

In S808, the action determination unit 303 multiplies the cost of the passing mode selected in S804 by a coefficient (Agreement_factor) based on the cooperation degree (the agreement degree) in accordance with Formula (9) or Formula (10). For example, in a case where the first passing mode is selected in S804, the action determination unit 303 multiplies the cost of the first passing mode by Agreement_factor in accordance with Formula (9).

In S809, the action determination unit 303 selects the passing mode of the minimum cost, by using the cost of one passing mode out of the costs calculated in S807 and the cost of the other passing mode calculated in S808. Then, the action determination unit 303 determines action corresponding to the selected passing mode.

In S810, the travel control unit 204 generates a travel trajectory of the vehicle 401 based on the action determined in S809, and controls the traveling of the vehicle 401, based on the travel trajectory that has been generated. As described above, for example, when the vehicle 401 travels in the second passing mode, the travel control unit 204 passes through the common area 406 while avoiding the vehicle 404.

In S811, the cooperative action determination unit 203 determines whether to end the cooperative action. When determining to end the cooperative action, the cooperative action determination unit 203 ends the series of operations, and in the other cases, the processing returns to S806 to repeat the processing.

In this manner, in the above-described embodiment, it becomes possible to determine the action of the moving body to pass through a specific area on its movement route. The above-described vehicle 401 acquires the moving situation of the vehicle 401 and the moving situation of the vehicle 402, which is the cooperation partner, and calculates the cooperation degree (for example, the agreement degree), based on the moving situation of the vehicle 401 and the moving situation of the vehicle 402. Then, the vehicle 401 determines the action of the vehicle 401 for the common area so as to increase the cooperation degree. In this situation, the cooperation degree increases, as the moving situations in which one of the vehicle 401 and the vehicle 402, which is the cooperation partner, exits from the common area and then the other one enters the common area. By configuring in this manner, when passing through the common area, it becomes possible to advance the operation in a cooperative manner between a plurality of moving bodies without making an agreement with each other via communication.

Note that in the above description, the description has been given assuming that the vehicle 401 or the vehicle 402 travels in the lane straight along the lane. That is, the description has been given on the assumption that the moving situation of each vehicle can be obtained with accuracy. However, the vehicle does not always travel in the center of the lane, and may swing left and right. In addition, in a case where a recognition technique such as image recognition is used, the recognized advancing direction of the vehicle may not coincide with the direction of the lane (for example, the center of the lane). For this reason, in a case where the predicted advancing direction of the vehicle is different from the direction of the center of the lane, the predicted moving situation (for example, the moving speed) of the vehicle is compensated with a predicted advancing direction. By configuring in this manner, it becomes possible to improve the prediction accuracy of the cooperative action such as the asymmetry.

In addition, in a case where the advancing direction of the vehicle is inclined largely more than a predetermined threshold relative to the direction of the lane, it is possible to consider that the vehicle enters a store adjacent to the lane or changes the course at an unrelated intersection. Therefore, when identifying the cooperation partner, the degree calculation unit 302 may exclude a vehicle inclined largely more than the predetermined threshold relative to the direction of the lane from candidates of the cooperation partner. In such a configuration, it becomes possible to avoid calculation of the agreement degree for an unnecessary vehicle, and it becomes possible to speed up the processing for identifying the cooperation partner.

<Summary of Embodiments>

(Item 1)

A moving body control system that determines action of a moving body (for example, 1, 401) for passing through a specific area (for example, 406) on a movement route, the moving body control system comprising:

an acquisition unit (for example, 202) configured to acquire a moving situation of the moving body and a moving situation of a cooperation partner (for example, 402);
a calculation unit (for example, 302) configured to calculate a cooperation degree indicating a degree that the moving body passes through the specific area in cooperation with the cooperation partner, based on the moving situation of the moving body and the moving situation of the cooperation partner; and
a determination unit (for example, 303) configured to determine the action of the moving body toward the specific area to increase the cooperation degree, wherein

the cooperation degree increases, as one of the moving body and the cooperation partner exits from the specific area and then the other one enters the specific area.

According to this embodiment, cooperative action of the moving body is achievable without necessitating an agreement via communication.

(Item 2)

The moving body control system according to item 1, wherein the calculation unit calculates the cooperation degree by calculating a ratio between a time necessary for one of the moving body and the cooperation partner that arrives earlier to pass through the specific area and a predicted arrival time difference at the specific area between the moving body and the cooperation partner.
According to this embodiment, it becomes possible to determine the cooperative action by using a quantitatively calculated cooperation degree (the agreement degree) with the cooperation partner.

(Item 3)

The moving body control system according to item 1, wherein

the determination unit changes the moving situation of the moving body toward the specific area to increase the cooperation degree, and
the calculation unit calculates a new cooperation degree, based on a changed moving situation of the moving body.

According to this embodiment, it becomes possible to control the cooperative action while watching the behavior of the cooperation partner.

(Item 4)

The moving body control system according to item 3, wherein the determination unit changes the moving situation of the moving body toward the specific area, and determines the action of the moving body to achieve either a first aspect in which the moving body enters the specific area after the cooperation partner exits from the specific area, or a second aspect in which the moving body passes through the specific area before the cooperation partner enters the specific area.
According to this embodiment, it becomes possible to pass in the optimal action out of a plurality of passing aspects.

(Item 5)

The moving body control system according to item 4, wherein the determination unit determines the action of the moving body, based on a comparison between a first cost for achieving the first aspect as a result of the action of the moving body and a second cost for achieving the second aspect as a result of the action of the moving body.
According to this embodiment, it becomes possible to determine the action with a smaller load, based on the load on the vehicle for achieving each passing aspect.

(Item 6)

The moving body control system according to item 5, wherein the determination unit calculates the first cost and the second cost from a current moving situation of the moving body, based on an index of comfort in a case where the moving body acts to achieve the moving situation of the moving body corresponding to each cost.
According to this embodiment, by using the index of comfort, it becomes possible to select the action in consideration of the riding comfort of an occupant.

(Item 7)

The moving body control system according to item 6, wherein, for either the first cost or the second cost, the determination unit multiplies a cost calculated, based on the comfort, by a coefficient having a value that increases as the cooperation degree decreases.
According to this embodiment, it becomes possible to select a passing aspect of a high cooperation degree (agreement degree).

(Item 8)

The moving body control system according to item 7, wherein the coefficient is based on a value obtained by applying a sigmoid function to the cooperation degree.
According to this embodiment, frequent switching between the passing aspects can be suppressed.

(Item 9)

The moving body control system according to item 1, further comprising an identification unit configured to identify the cooperation partner, based on a predicted arrival time difference at the specific area between the moving body and each of a plurality of traffic participants.
According to this embodiment, it becomes possible to identify a partner that can be most competitive in a specific area (the common area), as the cooperation partner.

(Item 10)

The moving body control system according to item 1, further comprising an area identification unit configured to identify the specific area, based on data from a sensor included in the moving body.
According to this embodiment, it becomes possible to grasp a specific area (the common area) in consideration of a movable obstacle such as a parked vehicle, without using a high-precision map.

(Item 11)

The moving body control system according to item 10, wherein the area identification unit identifies the specific area, based on image data captured by the moving body.
According to this embodiment, it becomes possible to identify the area using an image sensor inexpensively, without using an expensive sensor.

(Item 12)

The moving body control system according to item 10, wherein the area identification unit identifies the specific area, based on map data.
According to this embodiment, it becomes possible to identify the area by using precise data.

(Item 13)

The moving body control system according to item 1, wherein the specific area includes an area through which the moving body and the cooperation partner are each capable of passing and through which the moving body and the cooperation partner are incapable of passing simultaneously.
According to this embodiment, in the cooperative action, it becomes possible to pass along the traveling route on which only one moving body is capable of passing simultaneously.

(Item 14)

The moving body control system according to item 13, wherein the moving body and the cooperation partner each pass through the specific area, the cooperation partner moving in an advancing direction different from an advancing direction of the moving body.
According to this embodiment, in the cooperative action, it becomes possible to pass through the area such as an intersection which can be entered from several directions.

(Item 15)

The moving body control system according to item 14, wherein the moving body and the cooperation partner each pass through the specific area, the cooperation partner moving in the advancing direction opposite to the advancing direction of the moving body.
According to this embodiment, in the cooperative action, it becomes possible to pass through the area to be entered from opposite directions.

(Item 16)

The moving body control system according to item 1, further comprising a control unit configured to control traveling of the moving body toward the specific area, based on determined action of the moving body, as automated traveling of the moving body that does not necessitate a driver's traveling operation or automated traveling for assisting the driver's traveling operation.

According to this embodiment, it becomes possible to achieve the cooperative action in a case where the driver does not perform the traveling operation or in a case of driving assistance.

(Item 17)

The moving body control system according to item 16, wherein the control unit controls at least one of a speed and steering of the moving body, when performing the automated traveling of the moving body that does not necessitate the driver's traveling operation.

According to this embodiment, it becomes possible to achieve the travel control for cooperative action.

(Item 18)

A control method of a moving body control system that determines action of a moving body (for example, 1, 401) for passing through a specific area (for example, 406) on a movement route, the control method comprising:

an acquisition step (for example, S801) of acquiring a moving situation of the moving body and a moving situation of a cooperation partner (for example, 402);
a calculation step (for example, S806) of calculating a cooperation degree indicating a degree that the moving body passes through the specific area in cooperation with the cooperation partner, based on the moving situation of the moving body and the moving situation of the cooperation partner; and
a determination step (for example, S807-S809) of determining the action of the moving body toward the specific area to increase the cooperation degree, wherein
the cooperation degree increases, as one of the moving body and the cooperation partner exits from the specific area and then the other one enters the specific area.

According to this embodiment, cooperative action of the moving body is achievable without necessitating an agreement via communication.

(Item 19)

A storage medium that stores a program for causing a computer to function as each unit of a moving body control system, the moving body control system determining action of a moving body (for example, 1, 401) for passing through a specific area (for example, 406) on a movement route, the moving body control system comprising:

an acquisition unit (for example, 202) configured to acquire a moving situation of the moving body and a moving situation of a cooperation partner (for example, 1, 402);
a calculation unit (for example, 302) configured to calculate a cooperation degree indicating a degree that the moving body passes through the specific area in cooperation with the cooperation partner, based on the moving situation of the moving body and the moving situation of the cooperation partner; and
a determination unit (for example, 303) configured to determine the action of the moving body toward the specific area to increase the cooperation degree, wherein
the cooperation degree increases, as one of the moving body and the cooperation partner exits from the specific area and then the other one enters the specific area.

According to this embodiment, cooperative action of the moving body is achievable without necessitating an agreement via communication.

The invention is not limited to the foregoing embodiments, and various variations/changes are possible within the spirit of the invention.

**Claims**

1. A moving body control system that determines action of a moving body for passing through a specific area on a movement route, the moving body control system comprising:

   acquisition means for acquiring a moving situation of the moving body and a moving situation of a cooperation partner;
   calculation means for calculating a cooperation degree indicating a degree that the moving body passes through the specific area in cooperation with the cooperation partner, based on the moving situation of the moving body and the moving situation of the cooperation partner; and
   determination means for determining the action of the moving body toward the specific area to increase the cooperation degree, wherein
   the cooperation degree increases, as one of the moving body and the cooperation partner exits from the specific area and then the other one enters the specific area.

2. The moving body control system according to claim 1, wherein the calculation means calculates the cooperation degree by calculating a ratio between a time necessary for one of the moving body and the cooperation partner that arrives earlier to pass through the specific area and a predicted arrival time difference at the specific area between the moving body and the cooperation partner.

3. The moving body control system according to claim 1, wherein

   the determination means changes the moving situation of the moving body toward the specific area to increase the cooperation degree, and
   the calculation means calculates a new cooperation degree, based on a changed moving situation of the moving body.

4. The moving body control system according to claim 3, wherein the determination means changes the moving situation of the moving body toward the specific area, and determines the action of the moving body to achieve either a first aspect in which the moving body enters the specific area after the cooperation partner exits from the specific area, or a second aspect in which the moving body passes through the specific area before the cooperation partner enters the specific area.

5. The moving body control system according to claim 4, wherein the determination means determines the action of the moving body, based on a comparison between a first cost for achieving the first aspect as a result of the action of the moving body and a second cost for achieving the second aspect as a result of the action of the moving body.

6. The moving body control system according to claim 1, further comprising identification means for identifying the cooperation partner, based on a predicted arrival time difference at the specific area between the moving body and each of a plurality of traffic participants.

7. The moving body control system according to claim 1, further comprising area identification means for identifying the specific area, based on data from a sensor included in the moving body.

8. The moving body control system according to claim 7, wherein the area identification means identifies the specific area, based on image data captured by the moving body.

9. The moving body control system according to claim 7, wherein the area identification means identifies the specific area, based on map data.

10. The moving body control system according to claim 1, wherein the specific area includes an area through which the moving body and the cooperation partner are each capable of passing and through which the moving body and the cooperation partner are incapable of passing simultaneously.

11. The moving body control system according to claim 10, wherein the moving body and the cooperation partner each pass through the specific area, the cooperation partner moving in an advancing direction different from an advancing direction of the moving body.

12. The moving body control system according to claim 1, further comprising control means for controlling traveling of the moving body toward the specific area, based on determined action of the moving body, as automated traveling of the moving body that does not necessitate a driver's traveling operation or automated traveling for assisting the driver's traveling operation.

13. The moving body control system according to claim 12, wherein the control means controls at least one of a speed and steering of the moving body, when performing the automated traveling of the moving body that does not necessitate the driver's traveling operation.

14. A control method of a moving body control system that determines action of a moving body for passing through a specific area on a movement route, the control method comprising:

acquiring a moving situation of the moving body and a moving situation of a cooperation partner;
calculating a cooperation degree indicating a degree that the moving body passes through the specific area in cooperation with the cooperation partner, based on the moving situation of the moving body and the moving situation of the cooperation partner; and
determining the action of the moving body toward the specific area to increase the cooperation degree, wherein the cooperation degree increases, as one of the moving body and the cooperation partner exits from the specific area and then the other one enters the specific area.

15. A computer readable storage medium that stores a program for causing a computer to function as each means of a moving body control system, the moving body control system determining action of a moving body for passing through a specific area on a movement route, the moving body control system comprising:

acquisition means for acquiring a moving situation of the moving body and a moving situation of a cooperation partner;
calculation means for calculating a cooperation degree indicating a degree that the moving body passes through the specific area in cooperation with the cooperation partner, based on the moving situation of the moving body and the moving situation of the cooperation partner; and
determination means for determining the action of the moving body toward the specific area to increase the cooperation degree, wherein

the cooperation degree increases, as one of the moving body and the cooperation partner exits from the specific area and then the other one enters the specific area.

# F I G. 1

# F I G. 2

22

201
**TARGET OBJECT RECOGNITION UNIT**

202
**MOVING SITUATION ACQUISITION UNIT**

203
**COOPERATIVE ACTION DETERMINATION UNIT**

204
**TRAVEL CONTROL UNIT**

# F I G. 3

203

301
**AREA IDENTIFICATION UNIT**

302
**DEGREE CALCULATION UNIT**

303
**ACTION DETERMINATION UNIT**

# F I G. 4

# F I G. 5

# F I G. 6

COST (Mode 1 cost) IN FIRST PASSING ASPECT (PASSING MODE) = C1 + C3

DECELERATE AND ALLOW COOPERATION PARTNER TO PASS

PASS THROUGH COMMON AREA

# F I G. 7

COST (Mode 2 cost) IN SECOND PASSING ASPECT (PASSING MODE) = C2 + C4

PASS THROUGH COMMON AREA

DECELERATE AND WAIT

**F I G. 8**

START

ACQUIRE MOVING SITUATIONS OF SELF-VEHICLE AND SURROUNDING TRAFFIC PARTICIPANTS — S801

IDENTIFY COMMON AREA — S802

IDENTIFY COOPERATION PARTNER FROM SURROUNDING TRAFFIC PARTICIPANTS — S803

SELECT PASSING MODE OF MINIMUM COST, AND DETERMINE ACTION OF SELF-VEHICLE — S804

CONTROL TRAVELING OF SELF-VEHICLE BASED ON ACTION DETERMINED — S805

CALCULATE COOPERATION DEGREE (ex.AGREEMENT$_{agent}$ DEGREE) AFTER CONTROL — S806

CALCULATE COST OF EACH PASSING MODE — S807

MULTIPLY COST OF IMMEDIATELY PREVIOUSLY SELECTED PASSING MODE BY COEFFICIENT BASED ON COOPERATION DEGREE — S808

SELECT PASSING MODE OF MINIMUM COST, AND DETERMINE ACTION OF SELF-VEHICLE — S809

CONTROL TRAVELING OF SELF-VEHICLE BASED ON ACTION DETERMINED — S810

END COOPERATIVE ACTION? — S811

NO

YES

END

## EUROPEAN SEARCH REPORT

**Application Number**

EP 25 16 0127

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/345310 A1 (YOON JI HYUN [KR]) 30 November 2017 (2017-11-30) | 1,3,4, 6-8,10, 12-15 | INV. G08G1/16 B60W30/09 |
| A | * paragraphs [0016] - [0071]; figures 1-3 * | 2,5,9,11 | B60W30/095 B60W30/18 |
| X | JP 2019 070900 A (HONDA MOTOR CO LTD) 9 May 2019 (2019-05-09) | 1,3-15 | |
| Y | * paragraphs [0023] - [0055]; figures 1-9 * | 2 | |
| Y | JP 7 203279 B2 (HITACHI ASTEMO LTD [JP]) 12 January 2023 (2023-01-12) * paragraphs [0017] - [0018], [0026], [0028], [0034] - [0037]; figure 1 * * paragraphs [0068] - [0072], [0074] - [0094], [0154]; figure 7 * | 2 | |
| X | US 2022/410890 A1 (TAKEI SHOICHI [JP] ET AL) 29 December 2022 (2022-12-29) * paragraphs [0003] - [0005], [0027] - [0079]; figure 7 * | 1,14,15 | |

**TECHNICAL FIELDS SEARCHED (IPC)**

G08G
B60W

The present search report has been drawn up for all claims

| Place of search | Date of completion of the search | Examiner |
|---|---|---|
| The Hague | 1 September 2025 | Pariset, Nadia |

EPO FORM 1503 03.82 (P04C01)

**EP 4 632 714 A1**

## ANNEX TO THE EUROPEAN SEARCH REPORT
## ON EUROPEAN PATENT APPLICATION NO.          EP 25 16 0127

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2025

| Patent document cited in search report | Publication date | Patent family member(s) | Publication date |
|---|---|---|---|
| US 2017345310 A1 | 30-11-2017 | CN 107433946 A | 05-12-2017 |
| | | KR 101786352 B1 | 15-11-2017 |
| | | US 9802614 B1 | 31-10-2017 |
| | | US 2017345310 A1 | 30-11-2017 |
| JP 2019070900 A | 09-05-2019 | JP 6633588 B2 | 22-01-2020 |
| | | JP 2019070900 A | 09-05-2019 |
| JP 7203279 B2 | 12-01-2023 | DE 112021000247 T5 | 06-10-2022 |
| | | JP 7203279 B2 | 12-01-2023 |
| | | JP WO2021199579 A1 | 07-10-2021 |
| | | WO 2021199579 A1 | 07-10-2021 |
| US 2022410890 A1 | 29-12-2022 | BR 112022010315 A2 | 16-08-2022 |
| | | CN 114761301 A | 15-07-2022 |
| | | EP 4071025 A1 | 12-10-2022 |
| | | EP 4201772 A1 | 28-06-2023 |
| | | JP 7266709 B2 | 28-04-2023 |
| | | JP WO2021111164 A1 | 10-06-2021 |
| | | US 2022410890 A1 | 29-12-2022 |
| | | WO 2021111164 A1 | 10-06-2021 |

EPO FORM P0459

For more details about this annex : see Official Journal of the European Patent Office, No. 12/82

**EP 4 632 714 A1**

**Patent documents cited in the description**

- US 10139828 B